# EUROPÄISCHE PATENTANMELDUNG

(11) **EP 1 930 695 A2**
(43) Veröffentlichungstag der Anmeldung: **11.06.2008**
(21) Anmeldenummer: 07121718.6
(22) Anmeldetag: 28.11.2007
(51) Int. Cl.: G01C 21/32, G01C 21/36

(54) **Verfahren und Vorrichtung zum Betreiben eines Navigationsgeräts**

(30) Priorität: 06.12.2006 DE 102006057598
(71) Anmelder: VDO Automotive AG, 93055 Regensburg (DE)
(72) Erfinder: Wuerz, Reiner, 35630, Ehringshausen (DE)
(74) Vertreter: Maier, Daniel Oliver

(57) **Zusammenfassung**

Zum Betreiben eines Navigationsgeräts wird ein Anzeigevorrichtungssignal derart erzeugt, dass vorgegebene Landkartendaten auf einer Anzeigevorrichtung des Navigationsgeräts in Form einer Landkarte (MAP) dargestellt werden. Einem Nutzer des Navigationsgeräts wird zumindest eine Zusatzschicht (LAYER) mit vorgegebenen Zusatzdaten angeboten. Die Zusatzdaten umfassen eine vorgegebene Art von Zusatzinformationen. Abhängig von einer Auswahl des Nutzers wird die Zusatzschicht (LAYER) ausgewählt. Die Landkarte (MAP) und die ausgewählte über der Landkarte (MAP) gelegte Zusatzschicht (LAYER) werden dargestellt.

## Beschreibung

Die Erfindung betrifft ein Verfahren und eine Vorrichtung zum Betreiben eines Navigationsgeräts. Dabei wird ein Anzeigevorrichtungssignal derart erzeugt, dass vorgegebene Landkartendaten auf einer Anzeigevorrichtung des Navigationsgeräts in Form einer Landkarte dargestellt werden.

Navigationsgeräte sind heutzutage weit verbreitet. Die Navigationsgeräte sind regelmäßig mobile Einheiten, die beispielsweise in tragbaren Gehäusen und/oder in Fahrzeugen angeordnet sind. Beispielsweise kann ein derartiges tragbares Navigationsgerät einem Fußgänger und/oder einem Wanderer erleichtern, an sein Ziel zu gelangen. Ferner kann das Navigationsgerät in einem Pkw und/oder einem Lkw angeordnet sein und zu privaten und/oder beruflichen Zwecken verwendet werden. Je nachdem, wo das Navigationsgerät angeordnet ist und/oder von wem das Navigationsgerät zu welchem Zweck benutzt wird, werden regelmäßig unterschiedliche Anforderungen an das Navigationsgerät gestellt. Beispielsweise benötigt der Fußgänger keine Informationen über Autobahnen und/oder über eine vorgegebene Durchfahrtshöhe unter einer Brücke, sondern Informationen über Fußwege. Ein Fahrer eines der Fahrzeuge hingegen kann die Informationen über Autobahnen und/oder Brücken gut gebrauchen. Insbesondere ein Fahrer des LKWs und/oder des Pkws, insbesondere wenn der Pkw einen Anhänger zieht, kann Informationen benötigen, die auf die Eigenschaften dieser speziellen Fahrzeuge beziehungsweise Fahrzeuggespanne abgestimmt sind.

Es ist Aufgabe der Erfindung, ein Verfahren und eine Vorrichtung zum Betreiben eines Navigationsgeräts zu schaffen, das beziehungsweise die einfach eine erweiterte Routenplanung ermöglicht.

Die Aufgabe wird gelöst durch die Merkmale der unabhängigen Ansprüche. Vorteilhafte Ausgestaltungen der Erfindung sind in den Unteransprüchen angegeben.

Die Erfindung zeichnet sich aus durch ein Verfahren und eine Vorrichtung zum Betreiben eines Navigationsgeräts. Es wird ein Anzeigevorrichtungssignal derart erzeugt, dass auf einer Anzeigevorrichtung des Navigationsgeräts vorgegebene Landkartendaten in Form einer Landkarte dargestellt werden. Einem Nutzer des Navigationsgeräts wird zumindest eine Zusatzschicht mit vorgegebenen Zusatzdaten angeboten. Die Zusatzdaten umfassen eine vorgegebene Art von Zusatzinformationen. Abhängig von einer Auswahl des Nutzers wird die Zusatzschicht ausgewählt. Das Anzeigevorrichtungssignal wird derart erzeugt, dass die Landkarte und die ausgewählte über die Landkarte gelegte Zusatzschicht dargestellt werden.

Das Anzeigen der Zusatzschicht ermöglicht einfach, die Zusatzinformationen anzuzeigen, abhängig von der Auswahl des Nutzers des Navigationsgeräts. Diese Zusatzinformationen kann der Nutzer beim Navigieren und/oder bei einer Auswahl einer möglichen Route einfach berücksichtigen. Dies trägt einfach zu einer erweiterten Routenplanung bei. Das Anzeigen der Zusatzschicht impliziert regelmäßig ein Ermitteln der notwendigen Zusatzinformationen, insbesondere der Darstellungen der Zusatzinformationen und eine Lage der Darstellungen in der Landkarte. Gegenüber einem Navigationsgerät, bei dem für jede Art der Zusatzinformationen die ganze Landkarte mit den Zusatzinformationen abgespeichert wird, trägt das Speichern und das Anzeigen der Zusatzinformationen über die Zusatzschicht zu einem geringen Speicherplatzbedarf und zu einer kurzen Rechenzeit bei. Ferner ist darüber eine Datenreduktion beim Bildaufbau auf der Anzeigevorrichtung ermöglicht.

In einer vorteilhaften Ausgestaltung des Verfahrens werden dem Nutzer zusätzlich zu der Zusatzschicht zumindest zwei mögliche Routen vorgeschlagen. Der Nutzer kann abhängig von der mit der Zusatzschicht angezeigten Landkarte eine der möglichen Routen auswählen. Der Nutzer wird automatisch abhängig von der ausgewählten Route geführt. Dies ermöglicht einfach und intuitiv, die Zusatzinformationen in eine Routenplanung mit einzubeziehen.

In einer weiteren vorteilhaften Ausgestaltung des Verfahrens ist die Art der Zusatzinformationen landschaftsspezifisch. Dies kann einfach dazu beitragen, dem Nutzer des Navigationsgeräts zu helfen, seine Route zu planen. Insbesondere wenn der Nutzer sich mit einem Fahrzeug fortbewegt, das nicht in der Lage ist, sich über alle landschaftsspezifischen Besonderheiten hinweg zu bewegen.

In einer weiteren vorteilhaften Ausgestaltung des Verfahrens umfassen die landschaftsspezifischen Zusatzinformationen zumindest eine Höhenangabe. Dies kann einfach dazu beitragen, dem Nutzer des Navigationsgeräts zu helfen, seine Route zu planen. Insbesondere wenn der Nutzer sich mit einem Fahrzeug fortbewegt, das nicht in der Lage ist, sich über jegliche Höhenunterschiede hinweg zu bewegen.

In einer weiteren vorteilhaften Ausgestaltung des Verfahrens ist die Art der Zusatzinformationen umweltverschmutzungsspezifisch. Dies kann einfach dazu beitragen, dem Nutzer des Navigationsgeräts zu helfen, seine Route zu planen. Insbesondere wenn der Nutzer aus gesundheitlichen und/oder umweltverschmutzungsspezifischen Gründen bestimmte Gebiete meiden möchte.

In einer weiteren vorteilhaften Ausgestaltung des Verfahrens umfassen die umweltverschmutzungsspezifischen Zusatzinformationen ein Smog-Gebiet. Insbesondere können die umweltverschmutzungsspezifischen Zusatzinformationen die Lage und/oder Ausmaße des Smog-Gebiets umfassen. Dies kann einfach dazu beitragen, dem Nutzer des Navigationsgeräts zu helfen, seine Route zu planen. Insbesondere wenn der Nutzer aus gesundheitlichen und/oder umweltverschmutzungsspezifischen Gründen die Smog-Gebiete meiden möchte.

In einer weiteren vorteilhaften Ausgestaltung des Verfahrens ist die Art der Zusatzinformation streckenspezifisch. Die streckenspezifischen Zusatzinformationen können beispielsweise Tunnel, Brücken, insbesondere mit niedriger Durchfahrtshöhe, schmale Straßen, Gewichtsbeschränkungen auf Brücken und vieles mehr sein. Dies ist insbesondere vorteilhaft, wenn der Nutzer einen Lastkraftwagen und/oder ein Fahrzeuggespann fährt und/oder vorgegebene Strecken, beispielsweise die Tunnel, meiden möchte.

Die vorteilhaften Ausgestaltungen des Verfahrens können ohne weiteres auf vorteilhafte Ausgestaltungen der Vorrichtung übertragen werden.

Die Erfindung ist im Folgenden anhand von schematischen Zeichnungen näher erläutert.

Es zeigen:
- Figur 1: einen Ausschnitt einer Landkarte,
- Figur 2: der Ausschnitt der Landkarte mit einer ersten Zusatzschicht,
- Figur 3: der Ausschnitt der Landkarte mit einer zweiten Zusatzschicht,
- Figur 4: der Ausschnitt der Landkarte mit der ersten, der zweiten und einer dritten Zusatzschicht,

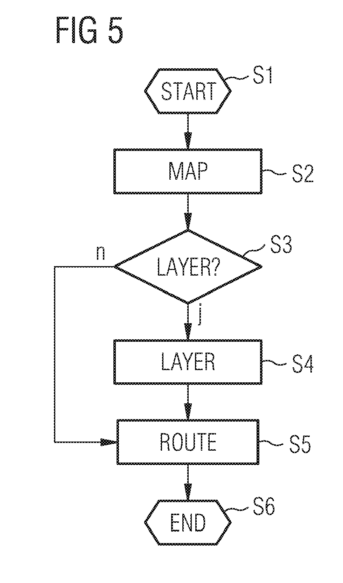

- Figur 5: ein Verfahren zum Betreiben eines Navigationsgeräts.

Elemente gleicher Konstruktion oder Funktion sind figurenübergreifend mit den gleichen Bezugszeichen gekennzeichnet.

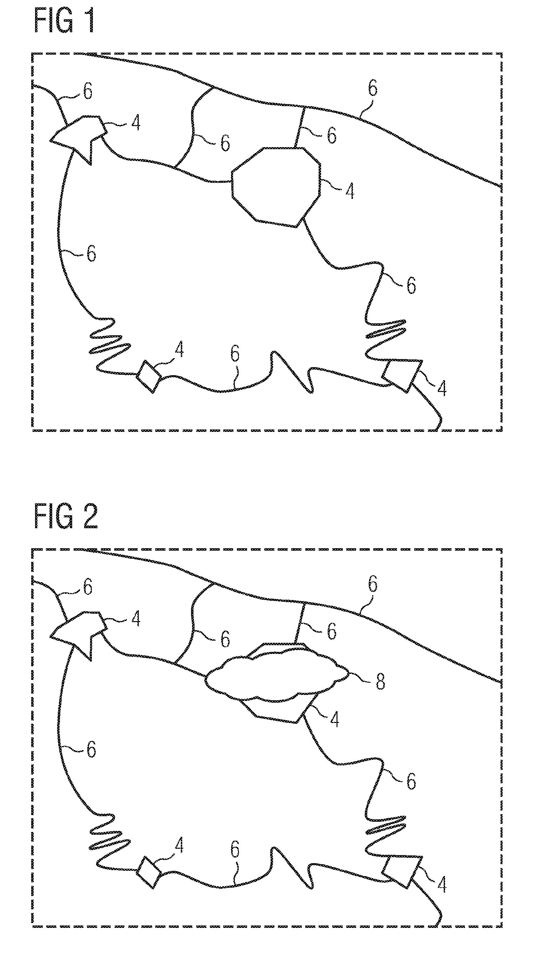

Ein Ausschnitt einer Landkarte MAP (Figur 1, Figur 2) umfasst bebaute Bereiche 4 und Straßen 6. Ferner kann die Landkarte MAP Wälder, Berge und/oder Gewässer umfassen. Die Landkarte MAP, insbesondere der Ausschnitt der Landkarte MAP, wird vorzugsweise auf einer Anzeigevorrichtung eines Navigationsgeräts dargestellt.

Das Navigationsgerät ist vorzugsweise ein tragbares Navigationsgerät und/oder in einem Kraftfahrzeug angeordnet. Zusätzlich zu der Landkarte MAP kann ein Nutzer des Navigationsgeräts zumindest eine, vorzugsweise mehrere Zusatzschichten LAYER auswählen, die jeweils eine vorgegebene Art von Zusatzinformationen umfassen. Alternativ dazu kann eine Zusatzschicht LAYER auch mehrere Arten von Zusatzinformationen umfassen.

Die Art der Zusatzinformationen kann beispielsweise landschaftsspezifisch, umweltverschmutzungsspezifisch und/oder streckenspezifisch sein.

Die umweltverschmutzungsspezifische Zusatzinformation kann beispielsweise in einer ersten Zusatzschicht LAYER enthalten sein und eine Existenz und/oder eine Lage eines Smog-Gebiets 8 (Figur 2) umfassen. Alternativ oder zusätzlich kann durch die Darstellung des Smog-Gebiets 8 auf eine erhöhte Smoggefahr hingewiesen werden, ohne dass aktuell dort tatsächlich Smog ist. Die Zusatzinformation, insbesondere das Smog-Gebiet 8, wird vorzugsweise so über die Landkarte MAP gelegt dargestellt, dass außerhalb des Bereichs, in dem die Zusatzinformation dargestellt ist, die Landkarte MAP unverändert bleibt. Die Zusatzschicht LAYER umfasst somit Bereiche, in denen sie auf den Nutzer transparent wirkt und Bereiche, in denen sie nicht transparent wirkt und in denen die Zusatzinformationen dargestellt ist.

Falls der Nutzer aus gesundheitlichen und/oder umweltverschmutzungsspezifischen Aspekten das Smog-Gebiet 8 meiden möchte, so kann er es einfach umfahren. Alternativ dazu können die Zusatzinformationen auch in eine Routenplanung mittels des Navigationsgeräts eingebunden werden. Beispielsweise kann sich der Nutzer abhängig von einem vorgegebenen Startort und einem vorgegebenen Zielort mehrere mögliche Routen ROUTE anzeigen lassen. Nach Zuschalten der Zusatzschicht LAYER kann der Nutzer dann eine der möglichen Routen ROUTE auswählen, die beispielsweise nicht durch das Smog-Gebiet 8 verläuft. Falls das Navigationsgerät mehrere mögliche Routen ROUTE darstellt, sind diese vorzugsweise verschiedenfarbig dargestellt.

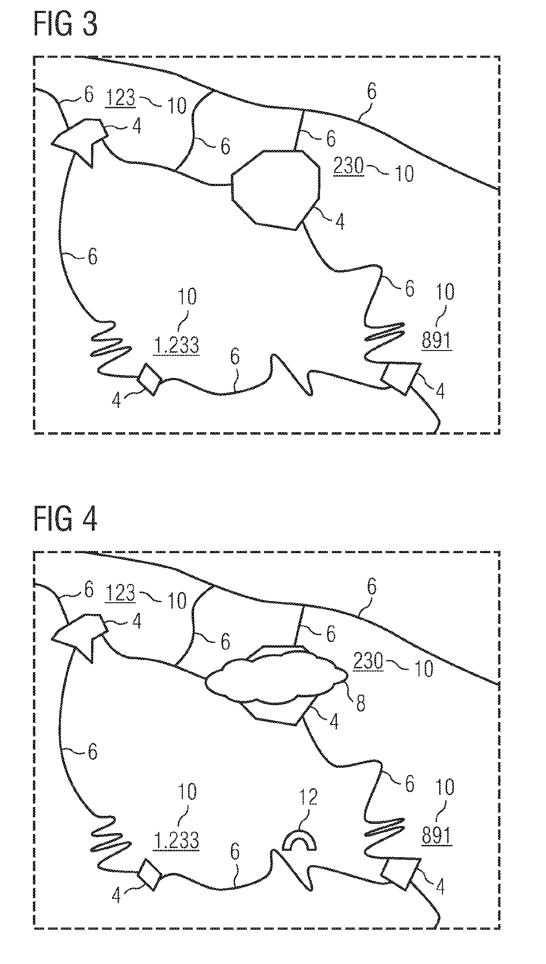

Die landschaftsspezifischen Zusatzinformationen können beispielsweise in einer zweiten Zusatzschicht LAYER enthalten sein und umfassen vorzugsweise Höhenangaben 10 (Figur 3). Die Höhenangaben 10 werden entsprechend dem Smog-Gebiet 8 in der Zusatzschicht LAYER über die Landkarte MAP gelegt und zusammen mit der Landkarte MAP dargestellt. Alternativ oder zusätzlich zu den Höhenangaben 10 können beispielsweise auch Steigungen angezeigt werden. Dies ist insbesondere dann vorteilhaft, wenn das Navigationsgerät in einem Lkw angeordnet ist und/oder wenn der Pkw, in dem das Navigationsgerät angeordnet ist, einen Anhänger zieht. Ferner könnte als Zusatzinformationen ein Höhenprofil eingeblendet werden, beispielsweise die Höhenprofile der möglichen Routen ROUTE.

Die streckenspezifischen Zusatzinformationen können beispielsweise in einer dritten Zusatzschicht LAYER enthalten sein und einen Tunnel 12 (Figur 4), eine Autobahn, eine Schnellstraße, eine Einbahnstraße und/oder eine geringe Durchfahrtshöhe unter einer Brücke umfassen. Ferner kann sich die streckenspezifische Zusatzinformation auf gebührenpflichtige Streckenabschnitte beziehen. Dann werden vorzugsweise als Zusatzdaten die durchschnittlichen Kosten entlang des entsprechenden Streckenabschnitts dargestellt. Ferner können Nutzer von Fahrzeugen, die vorgegebene Richtlinien nicht erfüllen, so dass eine Durchfahrt von bestimmten Bereichen verboten ist, eben diese Bereiche anzeigen lassen.

Die Zusatzschichten LAYER können einzeln oder zusammen, übereinander gelegt dargestellt werden.

Jede einzelne der Zusatzschichten LAYER benötigt im Vergleich zu der Landkarte MAP lediglich einen geringen Speicherplatz. Ferner kann die im Vergleich zu der Datenmenge der gesamten Landkarte MAP geringe Datenmenge der Zusatzschicht LAYER von dem Navigationsgerät schnell verarbeitet und angezeigt werden. Dies trägt dazu bei, dass eine Rechenzeit zum Darstellen der Zusatzinformationen in der Zusatzschicht LAYER auf der bereits dargestellten Landkarte MAP sehr kurz sein kann, im Vergleich zu der Rechenzeit, die benötigt werden würde, wenn die Zusatzinformationen in der Landkarte, insbesondere in den Landkartendaten enthalten wären, und wenn für jede Art von Zusatzinformationen immer die gesamte Landkarte MAP geladen werden müsste.

Ferner ermöglicht die Zusatzschicht LAYER, dass der Nutzer die Darstellung des Navigationsgeräts individuell auf seine Bedürfnisse anpassen kann. Beispielsweise kann sich der Lkw-Fahrer die Höhenangaben und die kostenpflichtigen Streckenabschnitte anzeigen lassen. Im Gegensatz dazu kann der Pkw-Fahrer, der beispielsweise einen Ausflug macht, sich lediglich das Smog-Gebiet 8 anzeigen lassen.

Auf einer Speichervorrichtung des Navigationsgeräts ist vorzugsweise ein Programm zum Betreiben des Navigationsgeräts gespeichert. Eine Steuervorrichtung des Navigationsgeräts kann auch als Vorrichtung zum Betreiben des Navigationsgeräts bezeichnet werden. Das Programm wird vorzugsweise nach einem Ermitteln der möglichen Routen ROUTE in einem Schritt S1 gestartet, in dem gegebenenfalls Variablen initialisiert werden.

In einem Schritt S2 wird ein Anzeigevorrichtungssignal derart erzeugt, dass die Landkarte MAP angezeigt wird, vorzugsweise mit den möglichen Routen ROUTE.

In einem Schritt S3 wird ein Nutzer des Navigationsgeräts gefragt, ob eine der Zusatzschichten LAYER angezeigt werden soll. Wählt der Nutzer eine oder mehrere der Zusatzschichten LAYER aus, so wird die Bearbeitung in einem Schritt S3 fortgesetzt. Wählt der Nutzer keine der Zusatzschichten LAYER aus, so wird die Bearbeitung in einem Schritt S5 fortgesetzt.

In dem Schritt S4 wird das Anzeigevorrichtungssignal derart erzeugt, dass zumindest eine der Zusatzschichten LAYER angezeigt wird abhängig von dem Wunsch des Nutzers des Navigationssystems.

In dem Schritt S5 wird eine der möglichen Routen ROUTE ausgewählt.

In einem Schritt S6 kann das Programm beendet werden. Vorzugsweise wird dem Nutzer des Navigationsgeräts jederzeit auf dessen Wunsch zumindest eine der Zusatzschichten LAYER angezeigt. Das Programm kann lediglich zum Darstellen der Zusatzschicht LAYER auch unabhängig von der Routenplanung abgearbeitet werden.

Die Erfindung ist nicht auf die angegebenen Ausführungsbeispiele beschränkt. Beispielsweise können alternativ oder zusätzlich zu der ersten, zweiten und/oder dritten Zusatzschicht LAYER zumindest eine weitere Zusatzschicht LAYER angezeigt werden.

## Patentansprüche

1. Verfahren zum Betreiben eines Navigationsgeräts, bei dem
- ein Anzeigevorrichtungssignal derart erzeugt wird, dass vorgegebene Landkartendaten auf einer Anzeigevorrichtung des Navigationsgeräts in Form einer Landkarte (MAP) dargestellt werden,
- einem Nutzer des Navigationsgeräts zumindest eine Zusatzschicht (LAYER) mit vorgegebenen Zusatzdaten angeboten wird, die eine vorgegebene Art von Zusatzinformationen umfassen,
- abhängig von einer Auswahl des Nutzers die Zusatzschicht (LAYER) ausgewählt wird,
- das Anzeigevorrichtungssignal derart erzeugt wird, dass die Landkarte (MAP) und die ausgewählte über der Landkarte (MAP) gelegte Zusatzschicht (LAYER) dargestellt werden.

2. Verfahren nach Anspruch 1, bei dem dem Nutzer zusätzlich zu der Zusatzschicht (LAYER) zumindest zwei mögliche Routen (ROUTE) vorgeschlagen werden und bei dem der Nutzer abhängig von der mit der Zusatzschicht (LAYER) angezeigten Landkarte (MAP) eine der möglichen Routen (ROUTE) auswählen kann und bei dem der Nutzer automatisch abhängig von der ausgewählten Route geführt wird.

3. Verfahren nach einem der vorstehenden Ansprüche, bei dem die Art der Zusatzinformationen landschaftsspezifisch ist.

4. Verfahren nach Anspruch 3, bei dem die landschaftsspezifische Zusatzinformation zumindest eine Höhenangabe (10) umfasst.

5. Verfahren nach einem der vorstehenden Ansprüche, bei dem die Art der Zusatzinformationen umweltverschmutzungsspezifisch ist.

6. Verfahren nach einem der vorstehenden Ansprüche, bei dem die umweltverschmutzungsspezifischen Zusatzinformationen ein Smog-Gebiet (8) umfassen.

7. Verfahren nach einem der vorstehenden Ansprüche, bei dem die Art der Zusatzinformationen streckenspezifisch ist.

8. Vorrichtung zum Betreiben eines Navigationsgeräts, die ausgebildet ist zum
- Erzeugen eines Anzeigevorrichtungssignals derart, dass vorgegebene Landkartendaten auf einer Anzeigevorrichtung des Navigationsgeräts in Form einer Landkarte (MAP) dargestellt werden,
- Anbieten zumindest einer Zusatzschicht (LAYER) mit vorgegebenen Zusatzdaten, die eine vorgegebene Art von Zusatzinformationen umfassen, gegenüber einem Nutzer des Navigationsgeräts,
- Auswählen der Zusatzschicht (LAYER) abhängig von einer Auswahl des Nutzers,
- Erzeugen des Anzeigevorrichtungssignals derart, dass die Landkarte (MAP) und die ausgewählte über der Landkarte (MAP) gelegte Zusatzschicht (LAYER) dargestellt werden.
